# EUROPEAN PATENT APPLICATION

(11) **EP 1 900 947 A1**
(43) Date of publication of application: **19.03.2008**
(21) Application number: 06767574.4
(22) Date of filing: 29.06.2006
(51) Int. Cl.: F16C 11/04, H04M 1/02

(54) **HINGE STRUCTURE, PORTABLE TERMINAL WITH THE HINGE STRUCTURE, AND HINGE UNIT**

(30) Priority: 04.07.2005 JP 2005194786
(71) Applicant: NEC Corporation, Minato-ku Tokyo 108-8001 (JP)
(72) Inventor: SAKAMOTO, Takahiro, Minato-ku, Tokyo 1088001 (JP)
(74) Representative: Betten & Resch
(86) International application number: PCT/JP2006/312957
(87) International publication number: WO 2007/004496

(57) **Abstract**

A hinge structure that has a simple structure, does not deteriorate with time and can prevent generation of clicking sound, and a mobile terminal having the hinge structure, and a hinge unit are provided. A hinge unit 3 of which a trunk and a hinge head 3a are linked to each other to freely rotate through a rotary shaft in a predetermined range of angle, a housing on the display side 1 to which the trunk is fixed, and a housing on the operation side 2 having the hinge head 3a inserted thereinto with a predetermined gap being kept are provided, in which, in a contact portion where the hinge head 3a and the housing on the operation side 2 contact with each other in a state that the housing on the display side 1 and the housing on the operation side 2 are opened most, the hinge head 3a and the housing on the operation side 2 are brought into surface contact with each other.

## Description

### Technical Field

The present invention relates to a hinge for rotatably linking two members together, and especially to a hinge that reduces clicking sound when the two members are opened or closed.

### Background Art

Recently, a type called "folding type" in which an upper housing and a lower housing are rotatably linked to each other through a hinge, respectively, has been the mainstream of a mobile terminal represented by a mobile-phone terminal.

A mobile terminal having elegance is required in the market. That is, not only for functionality, but also for finished appearance, a feeling of higher class is required.

Because a touch of class is required not only visually but also acoustically, a terminal without generating clicking sound upon opening and closing is preferred as a high class article.

One of hinge units includes a unit called "flipper type", and the hinge unit of this type almost does not generate a noise at the time of catching (clicking sound generated upon opening and closing) owing to its structure. However, because the hinge unit of the flipper type can be kept only in a completely open state or close state, and cannot be held at an arbitrary angle of opening, adopting the hinge unit of the flipper type for the mobile terminal of the folding type provides poor usability.

Therefore, for the mobile terminal of the folding type, a hinge of free-stop type that can be opened at an arbitrary angle has been adopted, other than the hinge unit of the flipper type.

In the hinge unit of the free-stop type, the hinge itself rotates at an angle larger than that to which an upper and lower housings are opened, and when the housings are completely opened or closed, torque is generated to hold the upper and lower housings not to be loose upon opening or closing (hereinafter, this is called "hinge-catching").

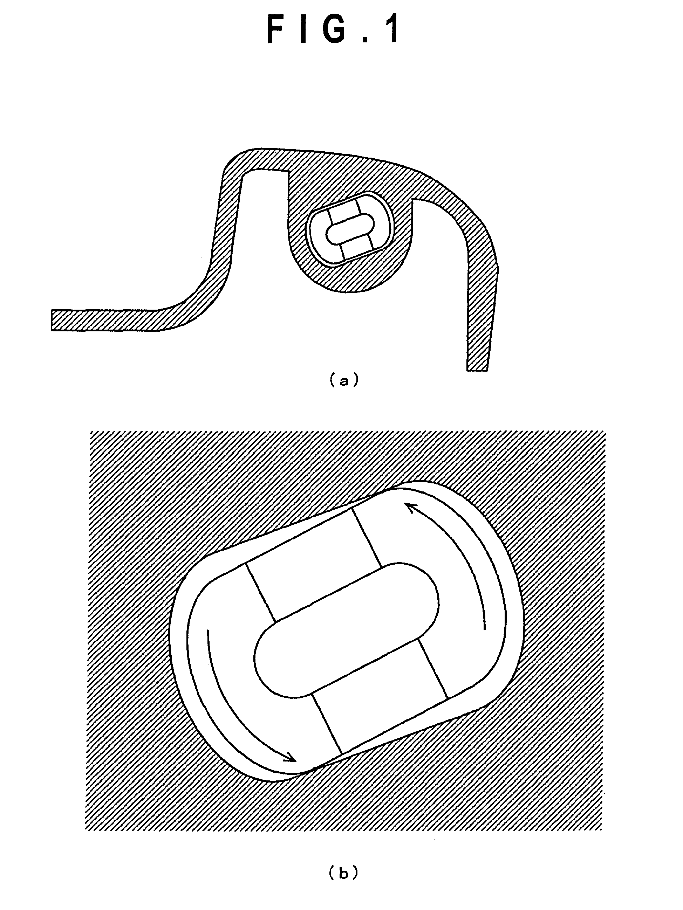

At this time, as shown in Figures 1(a) and 1(b), a hinge top and an engaged portion of a housing bearing portion collide with each other to generate the clicking sound.

Decreasing a clearance between the hinge top and the housing bearing portion can reduce this clicking sound.

However, the housings and the hinge top generally formed as a molded article of, for example, plastics have unevenness in dimension, and considering productivity, it is difficult to decrease the clearance.

Further, if the hinge top and the housing bearing portion are made to interfere with each other (for example, the clearance is made equal to or smaller than 0, as in the case of press fitting), both are scraped when assembled, resulting in poor productivity of an assembly line. Moreover, when reassembling after disassembly for a purpose such as maintenance, the clearance is changed to increase the clicking sound.

That is, the clicking sound has been attempted to be reduced by using a conventional hinge unit of the free-stop type, which causes a problem of poor productivity in an assembly line or insufficient reusability of a hinge unit.

A conventional art for preventing generation of clicking sound of a hinge includes "Opening and closing structure of display panel" disclosed in Patent Document 1. According to the invention disclosed in Patent Document 1, a hinge member has a protruding portion formed thereon and a display case has a roll attached to an elastic body, and in a state that the roll is always in contact with the protruding portion or the display case, a hinge is opened and closed.
Patent Document 1: Japanese Utility Model Laid-Open No. 04-13985

### Disclosure of the Invention

### Problem to be solved by the invention

However, in the invention disclosed in Patent Document 1, a support case and a display case are configured to respectively rotate around a separate support shaft as a pivot. In such a configuration, not only the number of parts of a hinge becomes large, but also man-hour of assembly has to be increased. That is, as well as being difficult to downsize a product and make it lightweight, a manufacturing cost is increased.

Further, because the elastic body is used to prevent generation of the clicking sound, when the elastic body deteriorates, an effect of preventing the clicking sound is reduced.

The present invention was made in view of such circumstances, and an object thereof is to provide a hinge structure that has a simple structure, does not deteriorate with time and can prevent generation of the clicking sound and a mobile terminal having the hinge structure, and a hinge unit.

### Means for solving problem

The present invention, to achieve the object described above, has an exemplary aspect that provides a hinge structure including: a hinge unit of which a trunk and a head are linked to each other to freely rotate through a rotary shaft in a predetermined range of angle; a first member to which the trunk is fixed; and a second member having the head inserted thereinto with a predetermined gap being kept, in which, in a first contact portion where the head and the second member contact with each other in a state that the first and second members are opened most, the head and the second member are brought into surface contact with each other.

In an exemplary aspect of the present invention, the first contact portion is preferably configured so that the head and the second member respectively have a first abutting surface along a normal direction of the rotary shaft, and the first abutting surfaces abut against each other.

In any of the configurations described above of an exemplary aspect of the present invention, in a second contact portion where the head and the second member contact with each other in a state that the first and second members are closed most, it is preferable that the head and the second member be in surface contact with each other, and in addition to this, the second contact portion is more preferably configured so that the head and the second member respectively have a second abutting surface along the normal direction of the rotary shaft, and the second abutting surfaces abut against each other.

Further, to achieve the object described above, the present invention has an exemplary aspect that provides a hinge structure including: a hinge unit of which a trunk and a head are linked to each other to freely rotate through a rotary shaft in a predetermined range of angle; a first member to which the trunk is fixed; and a second member having the head inserted thereinto with a predetermined gap being kept, in which, in a second contact portion where the head and the second member contact with each other in a state that the first and second members are closed most, the head and the second member are brought into surface contact with each other.

In an exemplary aspect of the present invention, the second contact portion is preferably configured so that the head and the second member respectively have a second abutting surface along a normal direction of the rotary shaft, and the second abutting surfaces abut against each other.

Further, to achieve the object described above, the present invention has an exemplary aspect that provides a mobile terminal including the hinge structure according to any of the configurations of an exemplary aspect described above of the present invention.

Further, to achieve the object described above, the present invention has an exemplary aspect that provides a hinge unit of which a trunk and a head are linked to each other to freely rotate through a rotary shaft in a predetermined range of angle, the head has an abutting portion having an abutting surface along a normal direction of the rotary shaft.

The present invention can provide a hinge structure that has a simple structure, does not deteriorate with time, and can prevent generation of clicking sound, and a mobile terminal and a hinge unit having the hinge structure.

### Best Mode for Carrying Out the Invention

### [First embodiment]

A first embodiment in which the present invention is suitably realized will be described.

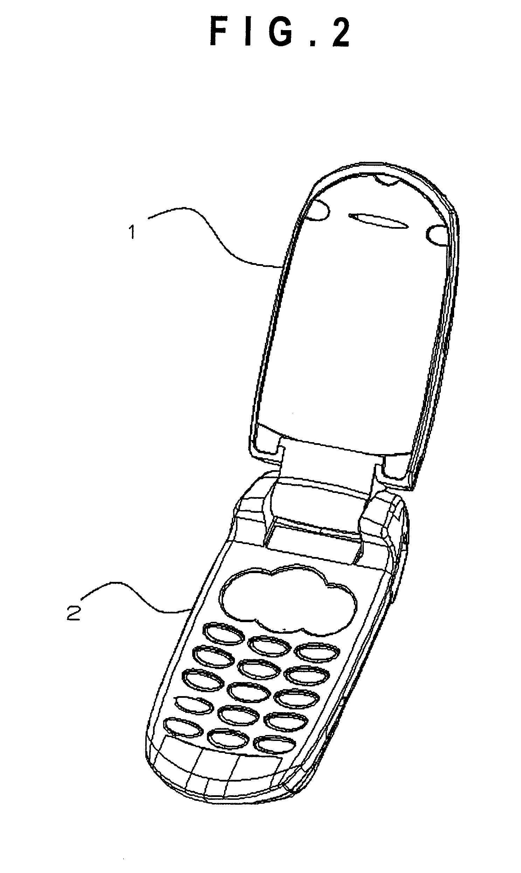

Figure 2 shows a configuration of a mobile-phone terminal according to the present embodiment. The mobile-phone terminal according to the present embodiment has a housing on a display side 1 and a housing on an operation side 2.

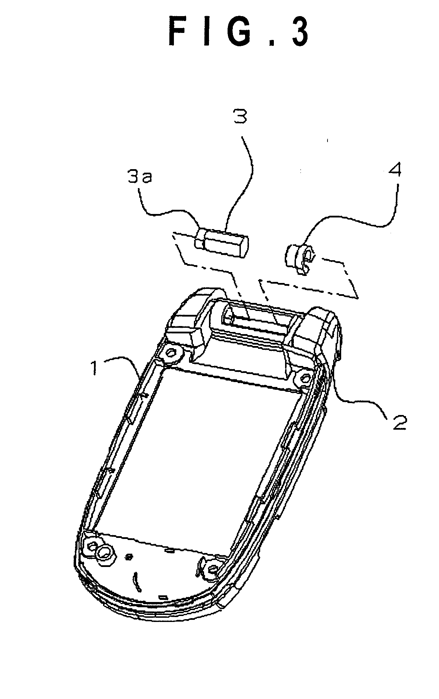

As shown in Figure 3, the housing on the display side 1 and the housing on the operation side 2 are rotatably linked to each other through a hinge unit 3. Also, between the housing on the display side 1 and the housing on the operation side 2, there is provided a dummy hinge 4 for leading cables etc. that electrically connects substrates etc. respectively positioned in both housings.

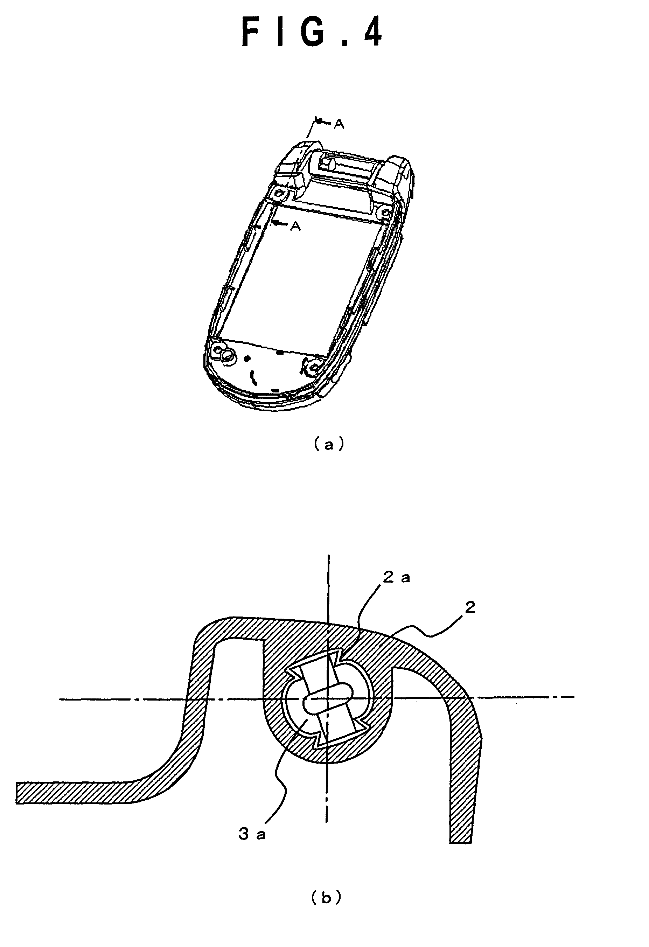

Figures 4(a) and 4(b) show a structure of the hinge unit 3 according to the present embodiment. In the present embodiment, a hinge top 3a has an approximately cross-shaped cross-section of the shaft direction. Also, the housing on the operation side 2 includes an abutting portion 2a that is a plane parallel to a normal direction of a hinge shaft. A clearance between the hinge top 3a and the housing on the operation side 2 is secured to be approximately a same size as a conventional structure.

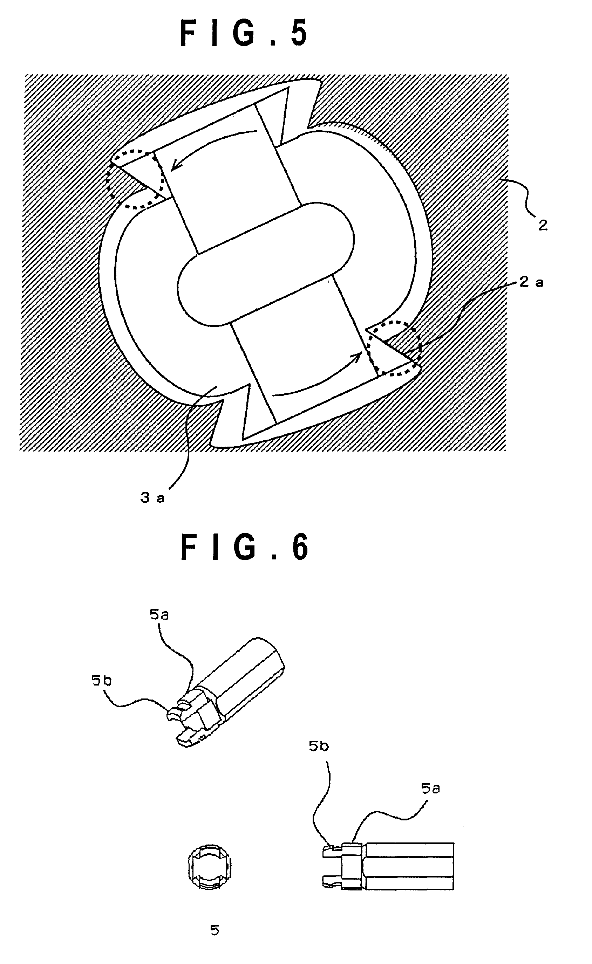

As shown in Figure 5, when the housing on the display side 1 and the housing on the operation side 2 are opened, the hinge top 3a further rotates from a state that the housing on the display side 1 and the housing on the operation side 2 are completely opened, and collides with the abutting portion 2a. Because the hinge top 3a and the abutting portion 2a both have a contact surface in the normal direction of the hinge shaft, these are brought into surface contact with each other at hinge-catching (a portion surrounded by the dotted line in Figure 5). If torque of both the housing on the display side 1 and the housing on the operation side 2 is equal, the larger an area of contact is, the more impact force is dispersed, thereby the clicking sound at hinge-catching is reduced.

In addition, when the housing on the display side 1 and the housing on the operation side 2 are closed, a rotational direction of the hinge top 3a is reversed, but similarly, the hinge top 3a and the housing on the operation side 2 are brought into surface contact with each other at hinge-catching, and therefore the clicking sound at hinge-catching is reduced.

### [Second embodiment]

A second embodiment in which the present invention is suitably made will be described. Figure 6 shows a configuration of a hinge unit 5 having a hook according to the present embodiment. The hinge unit 5 having a hook according to the present embodiment has the approximately same configuration as the hinge unit 3 of the first embodiment, but a hinge hook 5 is provided on an end portion of a hinge top 5a.

In the present embodiment, the end portion of the hinge top 5a has a hook-like shape, so that the hinge unit 5 having a hook is prevented from dropping.

In addition, the effect of reducing the clicking sound at hinge-catching is similar to the first embodiment, so the redundant description will be omitted.

Further, each embodiment described above is one example of suitable embodiments of the present invention, and the present invention is not limited to these embodiments.

For example, in the embodiments described above, the case where the cross-sections of the bearing portion of the hinge top and the housing are cross-shaped has been taken as an example, but the number of abutting portions is not limited to the number shown and may be larger or smaller than the number shown.

Also, in each embodiment described above, the hinge top having the abutting surfaces in both directions in which the terminal is opened and closed has been taken as an example, but the hinge top may have abutting surfaces only in either one of the directions. In this case, at the time of either closing or opening of the terminal, generation of the clicking sound at hinge-catching can be prevented.

In addition, in the embodiments described above, the case where the present invention is applied to the mobile-phone terminal of the folding type has been described as an example, but the present invention can be also applied to electronic equipment (a Personal Digital Assistance (PDA), an electronic notebook, an electronic dictionary, and a portable video game player) besides the mobile-phone terminal, and an apparatus besides the electronic equipment.

As described above, various modifications may be made to the present invention.

### Brief Description of the Drawings

Figures 1(a) and 1(b) show a structure and a state at the time of hinge-catching of a conventional hinge;
Figure 2 shows a configuration of a mobile-phone terminal according to a first embodiment in which the present embodiment is suitably made;
Figure 3 shows a structure of a hinge applied to the mobile-phone terminal according to the first embodiment;
Figures 4(a) and 4(b) show a cross-section view of the hinge applied to the mobile-phone terminal according to the first embodiment;
Figure 5 shows a state at the time of hinge-catching of the hinge applied to the mobile-phone terminal according to the first embodiment; and
Figure 6 shows a configuration of a hinge unit according to a second embodiment in which the present embodiment is suitably made.

### Description of Symbols

- 1: housing on the display side
- 2: housing on the operation side
- 2a: abutting portion
- 3: hinge unit
- 3a, 5a: hinge top
- 4: dummy hinge
- 5: hinge unit having a hook
- 5b: hinge hook

## Claims

1. A hinge structure, comprising:
a hinge unit of which a trunk and a head are linked to each other to freely rotate through a rotary shaft in a predetermined range of angle;
a first member to which the trunk is fixed; and
a second member having the head inserted thereinto with a predetermined gap being kept, wherein
in a first contact portion where the head and the second member contact with each other in a state that the first and second members are opened most, the head and the second member are brought into surface contact with each other.

2. The hinge structure according to claim 1, wherein
the first contact portion is configured so that the head and the second member respectively have a first abutting surface along a normal direction of the rotary shaft, and
the first abutting surfaces abut against each other.

3. The hinge structure according to claim 1 or 2, wherein
in a second contact portion where the head and the second member contact with each other in a state that the first and second members are closed most, the head and the second member are brought into surface contact with each other.

4. A hinge structure, comprising:
a hinge unit of which a trunk and a head are linked to each other to freely rotate through a rotary shaft in a predetermined range of angle;
a first member to which the trunk is fixed; and
a second member having the head inserted thereinto with a predetermined gap being kept, wherein
in a second contact portion where the head and the second member contact with each other in a state that the first and second members are closed most, the head and the second member are brought into surface contact with each other.

5. The hinge structure according to claim 3 or 4, wherein
the second contact portion is configured so that the head and the second member respectively have a second abutting surface along a normal direction of the rotary shaft, and
the second abutting surfaces abut against each other.

6. A mobile terminal, comprising the hinge structure according to any one of claims 1 to 5.

7. A hinge unit, **characterized in that**
a trunk and a head are linked to each other to freely rotate through a rotary shaft in a predetermined range of angle and
the head has an abutting portion having an abutting surface along a normal direction of the rotary shaft.
